# EUROPEAN PATENT SPECIFICATION

(11) **EP 2 849 167 B1**
(45) Date of publication and mention of the grant of the patent: **27.04.2016**
(21) Application number: 13382355.9
(22) Date of filing: 13.09.2013
(51) Int. Cl.: G08G 5/00

(54) **Method for controlling aircraft arrivals at a waypoint**
Verfahren zur Steuerung der Flugzeugankünfte an einem Wegpunkt
Procédé de commande des arrivées d'avion à un point de cheminement

(43) Date of publication of application: 18.03.2015
(73) Proprietor: The Boeing Company, Chicago, IL 60606-1596 (US)
(72) Inventor: Garrido Lopez, David, 28760 Tres Cantos (ES); Gomez Ledesma, Ramon, 28022 Madrid (ES)
(74) Representative: Boult Wade Tennant

(56) References cited:
- CRAIG JOHNSON ET AL: "Human-In-The-Loop (HITL) Simulation and Analysis of Optimized Profile Descent (OPD) Operations at Atlanta", 9TH AIAA AVIATION TECHNOLOGY, INTEGRATION, AND OPERATIONS CONFERENCE (ATIO), 21 September 2009 (2009-09-21), XP055109983, Reston, Virigina DOI: 10.2514/6.2009-7066 ISBN: 978-1-60-086977-8
- "Point Merge Integration of Arrival Flows Enabling Extensive RNAV Application and Continuous Descent - Operational Services and Environment Definition", , 19 July 2010 (2010-07-19), pages 1-124, XP055109978, Brétigny-sur-Orge (FR) Retrieved from the Internet: URL:https://www.eurocontrol.int/sites/defa ult/files/content/documents/sesar/point-me rge-osed-v2.0-2010.pdf [retrieved on 2014-03-26]

## Description

This invention relates to a method for controlling aircraft arrivals at a waypoint.

### Background of the Invention

The preferred arrival path for an aircraft towards a merging waypoint - that is to say, a waypoint proximal a landing site/airfield at which inbound aircraft are expected to merge - is a Continuous Descent Arrival (CDA). In the CDA, the descent is performed at near idle thrust values with little or no tactical intervention from Air Traffic Control (ATC). CDAs are well known for their associated fuel, emissions and noise savings.

The drawback of CDA, as will be well known to those skilled in the art, is that it is very difficult systematically to keep the flights separated in mid to high traffic density conditions, because of the inherent uncertainties associated with these operations.

The arrivals problem can be considered as a series of pairs of aircraft that converge to the same merging waypoint. The air traffic controller has to ensure that the aircraft stay separated at the merging waypoint. In other words, solving an arrivals problem is equivalent to solving each one of these pair wise conflicts. Depending on the aircraft positions and speeds, the aircraft may stay separated without the need of ATC intervention, but in general ATC should take action to ensure separation. A pair wise conflict can be solved by ATC using one of the following two basic techniques, both of which aim at causing a time delay on one of the flights in order to build sufficient spacing between the aircraft at the merging waypoint:
- Radar vectoring/path stretching: Prior to reaching the merging waypoint, one of the aircraft is given a new lateral path longer than the nominal path, thus introducing a delay.
- Speed control: Prior to reaching the merging waypoint, one of the aircraft is slowed down causing also a delay.

The Eurocontrol Point Merge (PM) procedure (see http://www.eurocontrol.int/eec/public/standard_page/proj_Point_Merge.html) follows the Radar Vectoring/path stretching concept. It forces some aircraft to hold altitude and extend their flight path to solve the conflicts. The de-confliction success rate is very high. However, the longer path and the altitude holding requirements of the PM procedure result in significant extra fuel use.

The Optimized Profile Descent (OPD) procedure by contrast (see Craig Johnson, Justin Ferrante, and Jeffrey Shepley, "Human-in-the-loop (HITL) Simulation and Analysis of Optimized Profile Descent (OPD) Operations at Atlanta" 9^{th} AIAA Aviation Technology, Integration, and Operations Conference (ATIO), 2009 AIAA 2009-7066) emphasizes speed control to avoid conflicts while keeping the aircraft on the nominal lateral path. The OPD procedure thus helps aircraft more easily to complete CDAs, so as to perform more efficient descents. The drawback of the OPD procedure, however, is that speed control often does not provide sufficient latitude to solve all of the pairwise conflicts.

### Summary of the Invention

Against this background, the present invention provides for an improved method for controlling the arrival of aircraft at a waypoint.

According to the present invention, a method for controlling aircraft arrivals at a waypoint is defined in claim 1. A computer program therefor is set out in claim 10.

The present invention provides a method for combining the cleanliness of the OPD procedures that lead to good rates of CDA success, with the capability of PM procedures completely to eliminate conflicts. A first waypoint ('tie waypoint') is defined at, for example, about 30 Nautical Miles (NM) from the merging waypoint. At the tie waypoint, aircraft speeds may be adjusted to permit aircraft to descend continuously, following an OPD concept. Closer to the merging waypoint (i.e. downstream of the tie waypoint) - for example about 10 NM before the merging waypoint, the PM procedure is applied to eliminate the remaining potential conflicts.

The combination of early OPD and late PM becomes a unique and differentiated concept that cannot be understood as a simple addition of OPD and PM. Particular synergistic effects are derived when the parameters of one part of the arrival control algorithm (the "PM" type parameters or the "OPD" type parameters) are used to alter and improve the parameters of the other part of the arrival control algorithm. This is because the interaction of the two procedures modifies and improves the quality of each other. For example, initial OPD and PM parameters can each be determined empirically. Then the initial OPD parameters can be recalculated holding the initial PM parameters fixed. Subsequently the initial PM parameters can be recalculated with the recalculated OPD parameters held fixed. Because each part of the arrival algorithm interacts with the other, the OPD and PM parameters tend to converge. Thus, the procedure wherein one part of the parameter set (the OPD parameters, say) is held fixed whilst the other part (the PM parameters, say) is optimised, and then vice versa, can be repeated iteratively until one or both of the OPD and PM parameters satisfies a convergence criterion (for example, the OPD and/or PM parameters, or at least one/some of them, change by less than a predetermined amount/percentage from iteration to iteration).

Thus, the proposed method produces a new concept that optimises aircraft descent strategy for efficiency without tolerating any conflicts.

In the following description, and in the claims, the terms "first" and "second" are employed. It is explicitly to be understood that these terms do not signify any particular order to the calculations. In particular, although it is preferable to determine the initial OPD parameters before the initial PM parameters, and then iteratively converge both parameter sets in turn starting with the OPD parameters, it is perfectly feasible to do the calculations the other way round, starting with the PM parameters.

Moreover, tie waypoints and PM arcs are described and claimed in terms of separations from the merging waypoint. However it will be understood that this is merely for convenience; provided that the separation between the PM arcs and the merge waypoint is less than the separation between the tie waypoint and the merge waypoint, it is a matter of convention and convenience as to how (and against what fixed locus) the locations of the PM arcs and tie waypoint are defined.

### Brief Description of the Drawings

The invention may be put into practice in a number of ways, one of which will now be described with reference to the drawings in which:
Figure 1 shows a schematic of flight paths for aircraft arriving towards a merging waypoint, in accordance with the Eurocontrol Point Merge procedure;
Figure 2 shows a schematic of flight paths for aircraft arriving towards a merging waypoint, in accordance with the Optimised Profile Descent (OPD) procedure;
Figure 3 shows a bar chart indicating the total number of conflicts for aircraft arriving at a merging waypoint from various tie waypoints, in accordance with the OPD procedure of Figure 2;
Figure 4 shows a schematic of a set of flight paths for aircraft, in accordance with a method for controlling aircraft arrivals at a merging waypoint, in accordance with an embodiment of the present invention; and
Figure 5 shows a flowchart illustrating the steps in the generation of parameters for the aircraft arrival control procedure of Figure 4.

### Detailed Description of a Preferred Embodiment

Before describing a method that illustrates a preferred embodiment of the present invention, a more detailed explanation of the Eurocontrol Point Merge (PM) and Optimized Profile Descent procedures that form the combined procedure are first provided.

The PM procedure has the objective of spacing descending aircraft into a merging waypoint. Arriving aircraft are enabled to descend continuously without tactical intervention from Air Traffic Control (ATC). About ten NM prior to reaching the merging waypoint, a procedure is applied to eliminate all possible conflicts at the merging waypoint. In other embodiments, the PM procedure can be implemented at any suitable distance prior to reaching the merging waypoint.

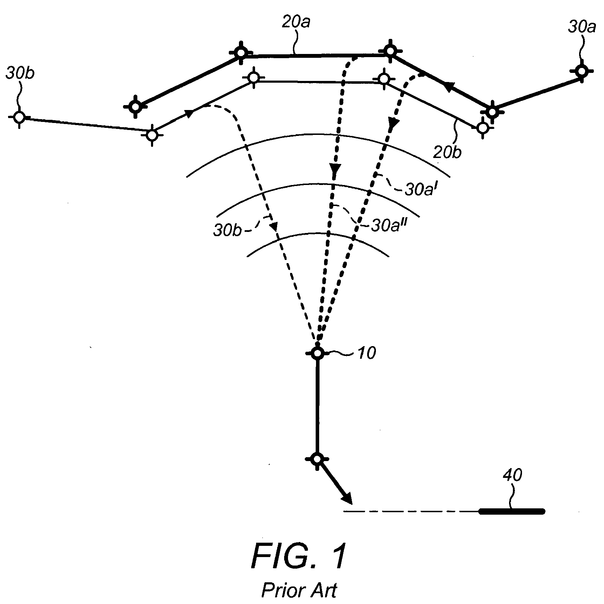

Figure 1 shows a schematic of flight paths for aircraft arriving towards a merging waypoint 10, in accordance with the prior art PM procedure. The procedure itself consists of defining two lateral trajectories 20a, 20b, of approximately circular shape and at constant distance to the merging waypoint 10 (approximately 10 NM), see Figure 1. These trajectories 20a, 20b are defined by Precision Area Navigation (P-RNAV) waypoints. The trajectories 20a, 20b are also constrained in speed and altitude, so that two aircraft flying in each of the trajectories are well separated by altitude, and well controlled by speed. Every aircraft that arrives following a left flight path 30b, will level-off, maintain altitude and speed, and follow the arc 20b (which in Figure 1 appears slightly closer to the merge waypoint 10) by default.

Aircraft arriving from the right along flight path 30a likewise level off, maintain altitude and speed, and follow along the arc 20a (in Figure 1, shown slightly further away from the merge waypoint 10).

The operation is monitored by an ATC Operator (ATCO) a.k.a. air traffic controller (not shown in Figure 1). If there is no aircraft between the arcs 20a, 20b and the merging waypoint 10, or preceding aircraft are sufficiently far beyond the arc trajectories 20a, 20b, the operator will send a DIRECT command to the aircraft. This immediately causes the aircraft to leave the trajectory, and descend toward the merging waypoint 10. Such a situation is illustrated by the left hand flight path 30b of Figure 1.

On the other hand, if the spacing with any preceding aircraft is below a given target threshold, the ATCO will not allow the aircraft to leave the trajectory. This is illustrated by the right hand flight path 30a of Figure 1; as may be seen, in cases where there is congestion at the merging waypoint 10, the aircraft is delayed from departing from the trajectory 20a so that, instead of following the shorter flight path 30a' to the merging waypoint, the aircraft instead continues along the trajectory arc 20a until subsequently receiving the DIRECT command that causes it to go directly to the merge waypoint 10 via flight path 30a". The total length of flight path 30a" is longer than that of flight path 30a', so that the aircraft has a delayed arrival time at the merging waypoint 10 in the former case relative to the latter.

Aircraft arriving at the merging waypoint 10 thus have a minimum separation. Further ATCO interventions between the merging waypoint 10 and the runway 40 at an airport proximal the merging waypoint 10, are thus avoided.

One of the advantages of the PM concept is that it allows for fully automatic navigation of the aircraft. Ideally a single final clearance communication is received from the ATCO.

The advantages of the PM procedure are thus:
- If it is well done, it virtually resolves all potential conflicts at the merging waypoint
- It is automatic, and loaded in the aircraft flight management systems, since it consists of two P-RNAV arrivals.

However the main disadvantages are:
- Flights are forced to level-off and maintain altitude for several miles.
- The arc trajectories 20a, 20b are perpendicular to the natural arrival direction, which makes the descent much longer
- As a consequence of the previous two issues, fuel consumption increases significantly (as does total flight time).

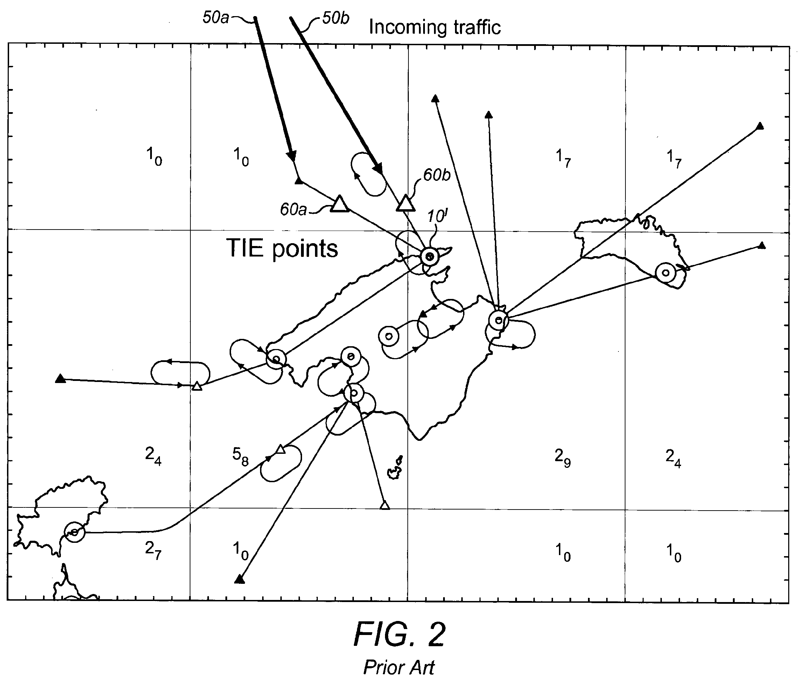

The Optimized Profile Descent (OPD) procedure is now explained in further detail with reference to Figure 2.

Figure 2 shows a schematic of flight paths into Palma de Majorca airport. Two particular flight paths 50a, 50b are shown, which each follow an OPD procedure. The flight paths 50a, 50b each include a tie waypoint 60a, 60b respectively, at a distance of, for example, about 30NM from a merging waypoint 10. In other embodiments, the tie waypoints 60a, 60b can be located at any suitable distance from the merging waypoint 10. The tie waypoints 60a, 60b are established so as to permit Continuous Descent Arrivals free of conflict at the merging waypoint 10.

In the OPD procedure illustrated in Figure 2, the ATCO watches every aircraft that passes over the tie waypoints 60a, 60b. Depending on the distance between two aircraft, when one of them passes a tie point 60a, 60b, the ATCO may request a deceleration to the trailing aircraft. The deceleration is based on a pre-computed look-up table. Additionally, to make the procedure effective, aircraft must follow altitude windows established in the procedure (hence the name of Optimized Profile Descent).

Thus in the OPD procedure, standard arrivals are preserved, so that aircraft fly toward a merging waypoint 10 using fairly straight trajectories 50, 50b, that is, flight paths are as short as conditions permit.

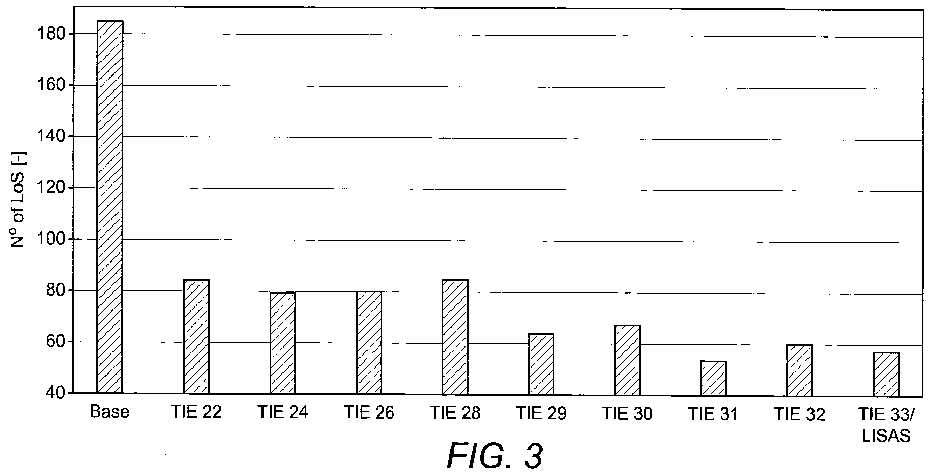

Simulations of arrivals into Palma de Majorca airport using the prior art OPD procedure were carried out using a variety of different tie waypoint to merging waypoint separations. The results are shown in Figure 3 in the form of a bar chart. The vertical axis represents the total number of expected conflicts and the horizontal axis represents a range of different tie waypoint to merging waypoint separations. The left hand bar represents the total number of conflicts in the case of no intervention.

As may be seen in Figure 3, not all the conflicts can be resolved. Conflicts reduced from 180 without OPD (left hand bar) to fewer than 100 once the OPD procedure was applied. However, even at the apparent optimal tie waypoint to merging waypoint separation of 31 NM, still around 50 of the 180 flights are predicted to conflict at the merging waypoint, when using the OPD procedure. These remaining 50 conflicts then have to be resolved by ATCO tactical intervention. This way of solving remaining conflicts is expensive for flights, and also for controllers in terms of workload.

In summary, although the OPD procedure resolves most of the conflicts and permits very clean descents, it is not perfect; a number of conflicts will have to be resolved via tactical ground control interventions.

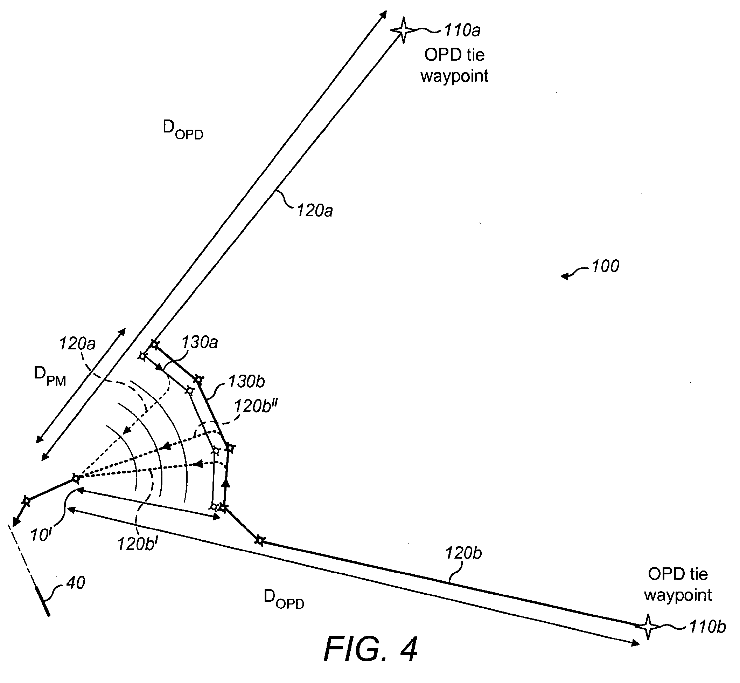

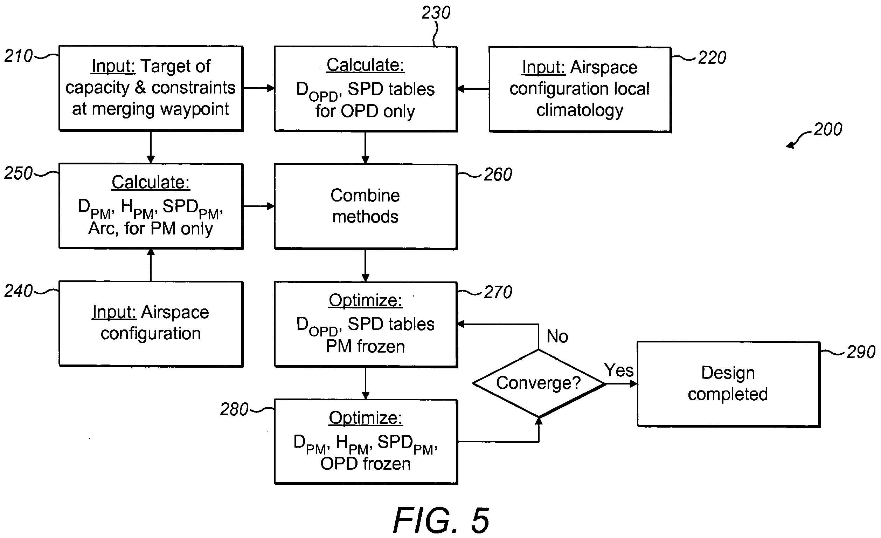

Having explained the principles of the prior art PM and OPD procedures, a method of controlling aircraft arrivals at a merging waypoint which embodies the present invention will now be described, with reference to Figures 4 and 5.

Referring first to Figure 4, a schematic diagram of flight paths for aircraft following a combined early OPD and late PM procedure 100 is shown.

Descending aircraft (not shown) arrive at tie waypoints 110a, 110b and are monitored there. Each tie waypoint 110a, 110b lies at a distance D_{OPD} upstream of a merging waypoint 10'. The distance D_{OPD} for each tie waypoint 110a, 110b can be the same or different distances, as suitable.

A look-up table is then generated to help the air traffic control officer (ATCO) that is supervising and controlling these arrivals. The table is displayed prominently to the ATCO, and consists of a list of successively slower speeds for shorter distances between aircraft reaching the tie waypoint 110a, 110b. The look-up table is calculated based on simulations of a sequence of real flights of the specific airspace configuration, real weather conditions and realistic aircraft guidance and performance. The fundamental parameter that affects the table values is the target capacity at the merging waypoint 10'. Also, other procedural constraints such as vertical constraints (i.e. altitude) and speed constraints at the merging waypoint 10' will strongly affect the resulting tables.

Commands are sent to the aircraft as they arrive at a respective tie waypoint 110a, 110b. The commanded decelerations allow the aircraft to remain on a continuous descent path (albeit with airspeed intervened). At the same time, the probability of conflict between aircraft at the merging waypoint 10' is highly reduced; as noted in connection with Figure 3, using the OPD procedure alone allows, according to example simulations, a reduction from 180 potential conflicts (no OPD), down to 50 interventions (OPD with tie waypoints at 31 nautical miles upstream of the merging waypoint).

Following the calculation of an initial set of OPD parameters, so as to permit speed interventions during a first, relatively early part of the flight path from the tie waypoint 110a, 110b towards the merging waypoint 10', a Point Merge (PM) procedure is then added in. Specifically, at about 10NM from the merging waypoint 10', a set of Point Merge arc trajectories 130a, 130b similar to the arc trajectories 20a, 20b of Figure 1 is defined. In other embodiments, the Point Merge procedure is added at any suitable distance from the merging waypoint 10'.

As seen in Figure 4, upon arrival at the arc trajectories 130a, 130b, every aircraft is forced to navigate along them until the ATCO observes that all preceding flights are sufficiently spaced with respect to the aircraft.

For example, a first aircraft may arrive from tie waypoint 110a to the first arc trajectory 130a, travel a short distance along that arc trajectory 130a, and then upon receipt of a DIRECT command, proceeds along flight path 120a to the merge waypoint 10' and from there onto the runway 40.

A second aircraft may arrive from tie waypoint 110b, by contrast, at the arc trajectory 130b. If the aircraft were immediately to divert from that arcuate path towards the merging waypoint 10' along flight path 120b', however, then this would result in a potential conflict with the aircraft arriving along flight path 120a, at the merging waypoint 10'. Thus, the aircraft arriving along flight path 120b instead continues further around the arc trajectory 130b until a COMMAND instruction is received, at which point the aircraft proceeds directly to the merging waypoint 10' along flight path 120b". It will be seen that flight path 120b" is longer than flight path 120b' so that the aircraft arrives at the merging waypoint 10' later in the former case than in the latter.

Thus, it is ensured that all conflicts are resolved without high-workload, expensive tactical interventions. Ideally, each aircraft only receives a single, final COMMAND instruction (indicating clearance to go directly to the merging waypoint 10') from the ATCO.

The combination of the OPD and the PM procedures is, paradoxically, a "divide and conquer" strategy. By first using OPD speed interventions systematically, most of the CDA are free from tactical disruptions. Then by subsequent systematic use of a PM procedure, the spacing at the merging waypoint 10' becomes essentially a "conflict-free" process.

The process for calculating the parameters for the method of an embodiment of the present invention will now be described with reference to the flowchart of Figure 5.

The first stage in the procedure is to calculate a set of first parameters for the OPD procedure. The first parameters are in the form of a look up table of commanded speeds for different aircraft separations at the merging waypoint 10'. The calculations also involve determining a distance D_{OPD} from one or more tie waypoints 110a, 110b to a merging waypoint.

The calculation of the first parameter set is based on three fundamental inputs (although typically other secondary inputs will be included as well):
Target of spacing at the merging waypoint 10': this is a first input constraint at box 210 in Figure 5.
Local climatology data. For instance, several days of weather data (aloft winds and temperatures mainly); and
Airspace configuration (a real (or realistic) sequence of traffic is employed);

The latter two constraints are input at box 220 in Figure 5.

Target spacing of aircraft at the merging waypoint 10' is an important parameter in the design of OPD. The larger the spacing that is imposed, the greater the decelerations that must be imposed upon aircraft in order to achieve the necessary spacing.

It is desirable to optimise the distance D_{OPD}. Too short a distance between the tie waypoint 110a; 110b and the merging waypoint 10' leads to poor OPD performance, since there is little room for the decelerations to elongate the spacing between aircraft. On the other hand, too long a distance between the tie waypoint 110a; 110b and the merging waypoint 10' also compromises OPD performance, since uncertainties in weather and/or aircraft performance degrade the efficiency of early speed interventions.

At box 230, using the inputs from boxes 210 and 220, a set of fast- time traffic simulations is run with realistic aircraft flight plans, performance, and navigation. In particular, at box 230, the OPD parameters are determined based upon speed constraint prior to the tie waypoint 110a; 110b: the OPD concept requires that all flights reach the tie waypoints at the same indicated airspeed, which can be accomplished, for instance, by acceleration and/or deceleration by one or more aircrafts.

This value is fixed, and is not changed throughout the simulations.

The result is a set of speed tables and an optimised D_{OPD}. The speed tables indicate to the air traffic controller how much a "trailing" aircraft must decelerate as a function of the distance of a "leading" aircraft to its own tie waypoint. Initially, approximate speed tables are calculated for several values of D_{OPD} using worst-case-scenario weather data. One simulation per value of D_{OPD} is run. The optimal value is the one that leads to a minimum of conflicts. Once this is done, the speed table is refined using simulation results.

Finally at box 230, the altitude windows that define the optimized profile are determined statistically from the trajectories of all aircraft.

Once the OPD parameters have been calculated, a second set of parameters for the PM procedure are next calculated at step 250. The PM parameters are preferably based upon two fundamental inputs, but can be based upon any number of suitable inputs (among other secondary inputs):
(A) Target of spacing at the merging waypoint 10': this is an important parameter for the design of the PM procedure. The greater the spacing that is imposed, the greater the radius of arc trajectories 130a, 130b must be. See step 210 of Figure 5.
(B) Airspace configuration (as with the OPD procedure); a real (or realistic) sequence of traffic is employed. See box 240 in Figure 5.

Using the weather data as well, a set of fast- time traffic simulations is run with realistic aircraft flight plans, performance, and navigation in box 250. The PM parameters which are determined at box 250 are
(i) speed constraint prior to the arc trajectories 130a, 130b. It has been noted above that aircraft should arrive at the tie waypoint 110a, 110b at a fixed speed. The PM procedure requires that all flights also reach the arc trajectories 130a, 130b at the same indicated airspeed. This value is fixed, and is not changed throughout the simulations.
   In order that both the speeds at the tie waypoints 110a, 110b and upon arrival at the arc trajectories 130a, 130b are fixed, whilst allowing variation of speed from aircraft to aircraft between those two locations in accordance with the initial OPD procedure as described, the OPD procedure itself builds in a final, relatively brief speed correction as each aircraft approaches the arc trajectories 130a, 130b. That final part of the flight from the tie waypoint 110a, 110b to the arc trajectories 130a, 130b can be relatively short because the distance required to decelerate to the fixed speed mandated at the arc trajectories 130a, 130b can be relatively short (in comparison with the total distance from the tie waypoint to the arc trajectories. By way of example only, the total separation between the tie waypoint 110a, 110b and the arc trajectories 130a, 130b might be 15-25NM, depending upon the specific parameters/design.
   The "block deceleration" distance over which aircraft decelerate, so as to arrive at the fixed speed (say, 210 knots) at the arc trajectories, may be around 5NM. Thus aircraft speeds optimized for the OPD procedure can be maintained for the majority of the period from the tie waypoint 110a, 110b to the arc trajectories 130a, 130b.
   It is anticipated that the relatively short period of deceleration to the fixed speed at the arc trajectories should be included in the overall OPD section calculations. In practice this typically results in the tie waypoint 110a, 110b being somewhat further from the merging waypoint 10' than otherwise, to accommodate that final deceleration to the fixed speed.
(ii) D_{PM} : This is the characteristic distance from the arc trajectories 130a, 130b to the merging waypoint 10'. This parameter is preferably optimized. Too short a distance D_{PM} leaves no room to de-conflict incoming traffic. Too long a distance D_{PM} leads to a substantial part of the arrival period being affected by the PM method, so that the drawbacks of the PM method (in terms of time and fuel efficiency) start to become an issue. The optimal value D_{PM} should be just slightly larger than that for which all conflicts are resolved.
(iii) Altitude constraint H_{PM} at the arc trajectories 130a, 130b: this value is directly dependent on D_{PM}. The arc trajectories 130a, 130b must be safely separated in distance, so one of the arc trajectories 130a is placed at a slightly different distance from the merging waypoint 10', to another of the arc trajectories 130b. Also, the arc trajectories 130a, 130b must be separated by altitude. These altitudes are a product of the simulation, by statistically obtaining the average altitude profiles of all the flights.

Once the preliminary OPD and PM parameters have been independently determined at boxes 230 and 250 respectively, an iterative process of the combined procedures starts at box 260.

The first step is to repeat the set of simulations, as described above in respect of the OPD parameter calculation (box 230), to recalculate the optimal OPD parameters, but now also including the influence of the PM parameters (which force the aircraft deconflicting at the merging waypoint 10') on the OPD parameters. For this recalculation, indicated at box 270 in Figure 5, the parameters of the PM procedure are kept frozen. Note that the altitude and speed constraints from the PM procedure will significantly alter the parameters of the OPD procedure, particularly the position of tie waypoints 110a, 110b, along with the speed tables. It is expected that D_{OPD} will increase to leave room for the PM arcs trajectories 130a, 130b. However, it is expected that the required decelerations will be smaller thanks to the ability of the PM interventions to space aircraft before the merging waypoint. The optimization objective is to reduce fuel consumption as much as possible while maintaining zero conflicts.

Once the initial OPD parameters have been recalculated at box 270, the second step in the process to combine the OPD and PM methods is carried out. This is shown in box 280 in Figure 5. Here, a second set of simulations is run to recalculate the optimal parameters of the PM procedure as described above (in respect of box 250), but this time keeping frozen the new (recalculated) values of the OPD procedure (i.e. holding constant the values calculated as a result of box 270).

It is observed that the influence of the OPD parameters on the total parameter set (OPD and PM parameters) notably reduces the potential conflicts prior to the introduction of the PM procedures (starting at distance D_{PM} from the merging waypoint 10'). Therefore, a reduced distance D_{PM} is expected to eliminate all conflicts. The optimization objective is to reduce fuel consumption as much as possible while achieving zero conflicts for these simulations as well, and, to limit the distance D_{PM} since, in general, the shorter that distance D_{PM}, the less the overall impact on efficiency (since the influence on the total parameter set by the PM parameters is minimized).

Because the OPD and PM procedures are complementary, repeating the two steps illustrated in boxes 270 and 280 results in convergence of the OPD and PM parameters. Thus the steps of boxes 270 and 280 are iteratively repeated until the first parameter set (the OPD parameters), the second parameter set (the PM parameters), and the optimization targets (D_{OPD} and D_{PM}) do not change appreciably, that is, a convergence criterion for at least one and preferably all of the OPD and PM parameters, plus the distances D_{OPD} and D_{PM}, is met. Then, the iterative process is halted, and the design of the combined procedure is considered complete. This is shown in box 290 of Figure 5.

Although a preferred embodiment of the invention has been described by way of illustration, it is to be understood that this is in no way limiting and that various modifications will be apparent to the skilled person. For example, whilst in the procedure explained above in connection with Figures 4 and 5, the OPD parameters are calculated before the PM parameters, and then the OPD parameters are subsequently recalculated whilst holding the PM parameters constant before the PM parameters are themselves recalculated, it is quite possible to reverse the order of the calculations, and still arrive at a converged matrix of first and second parameter sets along with converged distances D_{OPD} and D_{PM}. Similarly, although the distances can be measured relative to their merging waypoint 10', as illustrated in Figure 4, the distances can instead be calculated from another point or points, such as the tie points 110a, 110b. Moreover, it is to be understood that the term "waypoint" is not necessarily restricted to a point in space defined upstream of a terminus (airport runway). The term "waypoint" is intended to include the terminus itself. Since the merging waypoint is a defined (though not necessarily fixed) distance from the terminus, any calculations in accordance with embodiments of the present invention, relative to a merging waypoint, can be readily, linearly transposed relative to other fixed locations such as a terminus or runway in any even.

## Claims

1. A method of controlling aircraft arrivals at a merging waypoint, comprising the steps of:
(a) defining a tie waypoint (60a, 60b, 110a, 110b) which is at a first distance D_{OPD} from the merging waypoint (10, 10');
(b) generating a first parameter set of flight instructions for aircraft arriving at the tie waypoint (60a, 60b, 110a, 110b), the first parameter set including an aircraft speed instruction for a target separation between a first aircraft arriving at a target waypoint downstream of the tie waypoint (60a, 60b, 110a, 110b) and a second aircraft arriving at the target waypoint;
(c) defining a diversionary flight path (130a, 130b) which is at a distance D_{PM} from the merging waypoint (10, 10'), wherein D_{PM} < D_{OPD};
(d) generating a second parameter set of flight instructions for aircraft arriving at the diversionary flight path (130a, 130b), the second parameter set instructing the first aircraft to follow at least a part of the diversionary flight path before flying to the merging waypoint (10, 10'), whereby the total flight path of the first aircraft is increased, when it is determined that the expected arrival of the first and second aircraft at the target waypoint (10, 10') will have a separation that is shorter than a threshold separation;
(e) recalculating the tie waypoint (60a, 60b, 110a, 110b) and the first parameter set so as to optimize aircraft fuel consumption whilst maintaining a separation at the target waypoint which exceeds the threshold separation, wherein the diversionary flight path (130a, 130b) and the second parameter set are fixed whilst the tie waypoint distance D_{OPD} and the first parameter set are recalculated; and
(f) recalculating the diversionary flight path (130a, 130b) and the second parameter set so as to optimize the aircraft fuel consumption whilst maintaining a separation at the target waypoint which exceeds the threshold separation, wherein the recalculated tie waypoint (60a, 60b, 110a, 110b) and the recalculated first parameter set are fixed whilst the diversionary flight path and the second parameter set are in turn recalculated.

2. A method of controlling aircraft arrivals at a merging waypoint, comprising the steps of:
(a) defining a diversionary flight path (130a, 130b) which is at a distance D_{PM} from the merging waypoint (10,10') ;
(b) generating a second parameter set of flight instructions for aircraft arriving at the diversionary flight path (130a, 130b), the second parameter set instructing a first aircraft to follow at least a part of the diversionary flight path before flying to the merging waypoint (10, 10'), whereby the total flight path of the first aircraft is increased, when it is determined that the expected arrival of the first and a second aircraft at a target waypoint downstream of the tie waypoint will have a separation that is shorter than a threshold separation;
(c) defining a tie waypoint (60a, 60b, 110a, 110b) which is at a first distance D_{OPD} from the merging waypoint (10, 10') wherein D_{PM} < D_{OPD};
(d) generating a first parameter set of flight instructions for aircraft arriving at the tie waypoint (60a, 60b, 110a, 110b), the first parameter set including an aircraft speed instruction for a target separation between the first aircraft arriving at the target waypoint and the second aircraft arriving at the target waypoint;
(e) recalculating the diversionary flight path (130a, 130b) and the second parameter set so as to optimize the aircraft fuel consumption whilst maintaining a separation at the target waypoint which exceeds the threshold separation, wherein the tie waypoint (60a, 60b, 110a, 110b) and the first parameter set are fixed whilst the diversionary flight path and the second parameter set are recalculated; and
(f) recalculating the tie waypoint (60a, 60b, 110a, 110b) and the first parameter set so as to optimize aircraft fuel consumption whilst maintaining a separation at the target waypoint which exceeds the threshold separation, wherein the recalculated diversionary flight path (130a, 130b) and the recalculated second parameter set are fixed whilst the tie waypoint distance D_{OPD} and the first parameter set are in turn recalculated.

3. The method of claim 1 or claim 2, further comprising:
iteratively repeating steps (e) and (f) until recalculation of the tie waypoint (60a, 60b, 110a, 110b) /first parameter set and/or recalculation of the diversionary flight path (130a, 130b) /second parameter set converge so as to meet a convergence criterion.

4. The method of any preceding claim, wherein the step of generating a first parameter set of flight instructions comprises generating a look-up table including a plurality of different commanded aircraft speeds for a plurality of different spacings between the first and second aircraft.

5. The method of claim 4, wherein the look up table contents are generated upon the basis of target aircraft capacity at the merging waypoint.

6. The method of claim 5, wherein the look up table contents are further generated upon the basis of simulations of a plurality of flights each constrained by one or more of the following variables: airspace configuration; real weather conditions; altitude constraints; speed constraints; aircraft guidance; aircraft performance.

7. The method of any preceding claim, wherein the step of generating a second parameter set of flight instructions comprises generating instructions on the basis of target aircraft capacity at the merging waypoint (10, 10').

8. The method of claim 7, wherein the instructions are further generated on the basis of simulations of a plurality of flights, each constrained by one or more of the following variables:
(a) defining a tie waypoint (60a, 60b, 110a, 110b) at a first distance D_{OPD} from the merging waypoint (10, 10');
(b) generating a first parameter set of flight instructions for aircraft arriving at the tie waypoint (60a, 60b, 110a, 110b), the first parameter set including an aircraft speed instruction for a target separation between a first aircraft arriving at a target waypoint, and a second aircraft arriving at the target waypoint;
(c) defining a diversionary flight path at a distance D_{PM} from the merging waypoint (10, 10'), wherein D_{PM} < D_{OPD}; and
(d) generating a second parameter set of flight instructions for aircraft arriving at the diversionary flight path (130a, 130b), the second parameter set instructing the first aircraft to follow at least a part of the diversionary flight path before flying to the merging waypoint (10, 10'), whereby the total flight path length of the first aircraft is increased, when it is determined that the expected arrival of the first and second aircraft at the target waypoint will have a separation that is shorter than a threshold separation.

9. The method of any preceding claim, wherein the target waypoint is the merging waypoint.

10. A computer programme which, when executed, carries out the method steps of any of the preceding claims.

11. A computer programme product embodying or carrying the computer programme of claim 10.

## Patentansprüche

1. Verfahren zum Steuern der Ankunft von Luftfahrzeugen an einem Wegzusammenführungspunkt, das Schritte aufweist zum:
(a) Festlegen eines Anbindungswegpunkts (60a, 60b, 110a, 110b), der sich in einem ersten Abstand D_{OPD} zum Wegzusammenführungspunkt (10, 10') befindet,
(b) Erzeugen eines ersten Parametersatzes von Fluganweisungen für ein an dem Anbindungswegpunkt (60a, 60b, 110a, 110b) ankommendes Luftfahrzeug, wobei der erste Parametersatz eine Luftfahrzeuggeschwindigkeitsanweisung für einen Zielabstand zwischen einem ersten Luftfahrzeug, das an einem dem Anbindungswegpunkt (60a, 60b, 110a, 110b) nachgelagerten Zielwegpunkt ankommt, und einem zweiten Luftfahrzeug, das an dem Zielwegpunkt ankommt, umfasst,
(c) Festlegen einer Umleitungsflugbahn (130a, 130b), die sich in einem Abstand D_{PM} zum Wegzusammenführungspunkt (10, 10') befindet, wobei D_{PM} < D_{OPD} ist,
(d) Erzeugen eines zweiten Parametersatzes von Fluganweisungen für ein an der Umleitungsflugbahn (130a, 130b) ankommendes Luftfahrzeug, wobei der zweite Parametersatz das erste Luftfahrzeug anweist, zumindest einem Teil der Umleitungsflugbahn zu folgen bevor es zum Wegzusammenführungspunkt (10, 10') fliegt, wodurch sich die Gesamtflugbahn des ersten Luftfahrzeugs verlängert, wenn festgestellt wird, dass der Abstand der voraussichtlichen Ankunft des ersten Luftfahrzeugs am Zielwegpunkt (10, 10') zu der des zweiten Luftfahrzeugs kürzer als ein Abstandsgrenzwert ist,
(e) Neuberechnen des Anbindungswegpunkts (60a, 60b, 110a, 110b) und des ersten Parametersatzes zum Optimieren des Treibstoffverbrauchs des Luftfahrzeugs unter Aufrechterhaltung eines Abstands am Zielwegpunkt, der größer als der Abstandsgrenzwert ist, wobei die Umleitungsflugbahn (130a, 130b) und der zweite Parametersatz bei der Neuberechnung des Anbindungswegpunktabstands D_{OPD} und des ersten Parametersatzes nicht verändert werden,
(f) Neuberechnen der Umleitungsflugbahn (130a, 130b) und des zweiten Parametersatzes zum Optimieren des Treibstoffverbrauchs des Luftfahrzeugs unter Aufrechterhaltung eines Abstands am Zielwegpunkt, der größer als der Abstandsgrenzwert ist, wobei der neuberechnete Anbindungswegpunkt (60a, 60b, 110a, 110b) und der neuberechnete erste Parametersatz nicht verändert werden, während die Umleitungsflugbahn und der zweite Parametersatz ihrerseits neu berechnet werden.

2. Verfahren zum Steuern der Ankunft von Luftfahrzeugen an einem Wegzusammenführungspunkt, das Schritte aufweist zum:
(a) Festlegen einer Umleitungsflugbahn (130a, 130b), die sich in einem Abstand D_{PM} zum Wegzusammenführungspunkt (10, 10') befindet,
(b) Erzeugen eines zweiten Parametersatzes von Fluganweisungen für ein an der Umleitungsflugbahn (130a, 130b) ankommendes Luftfahrzeug, wobei der zweite Parametersatz ein erstes Luftfahrzeug anweist, zumindest einem Teil der Umleitungsflugbahn zu folgen bevor es zum Wegzusammenführungspunkt (10, 10') fliegt, wodurch sich die Gesamtflugbahn des ersten Luftfahrzeugs verlängert, wenn festgestellt wird, dass der Abstand der voraussichtlichen Ankunft des ersten Luftfahrzeugs am dem Anbindungswegpunkt nachgeordneten Zielwegpunkt zu der des zweiten Luftfahrzeugs kürzer als ein Abstandsgrenzwert ist,
(c) Festlegen eines Anbindungswegpunkts (60a, 60b, 110a, 110b), der sich in einem ersten Abstand D_{OPD} zum Wegzusammenführungspunkt (10, 10') befindet, wobei D_{PM} < D_{OPD} ist,
(d) Erzeugen eines ersten Parametersatzes von Fluganweisungen für ein an dem Anbindungswegpunkt (60a, 60b, 110a, 110b) ankommendes Luftfahrzeug, wobei der erste Parametersatz eine Luftfahrzeuggeschwindigkeitsanweisung für einen Zielabstand zwischen dem ersten Luftfahrzeug, das an dem Zielwegpunkt ankommt, und dem zweiten Luftfahrzeug, das an dem Zielwegpunkt ankommt, umfasst,
(e) Neuberechnen der Umleitungsflugbahn (130a, 130b) und des zweiten Parametersatzes zum Optimieren des Treibstoffverbrauchs des Luftfahrzeugs unter Aufrechterhaltung eines Abstands am Zielwegpunkt, der größer als der Abstandsgrenzwert ist, wobei der Anbindungswegpunkt (60a, 60b, 110a, 110b) und der erste Parametersatz bei der Neuberechnung der Umleitungsflugbahn und des zweiten Parametersatzes nicht verändert werden,
(f) Neuberechnen des Anbindungswegpunkts (60a, 60b, 110a, 110b) und des ersten Parametersatzes zum Optimieren des Treibstoffverbrauchs des Luftfahrzeugs unter Aufrechterhaltung eines Abstands am Zielwegpunkt, der größer als der Abstandsgrenzwert ist, wobei die neuberechnete Umleitungsflugbahn (130a, 130b) und der neuberechnete zweite Parametersatz nicht verändert werden, während der Anbindungswegpunktabstand D_{OPD} und der erste Parametersatz ihrerseits neu berechnet werden.

3. Verfahren nach Anspruch 1 oder 2, das ferner umfasst:
iteratives Wiederholen der Schritte (e) und (f) solange, bis die Neuberechnung von Anbindungswegpunkt (60a, 60b, 110a, 110b)/erstem Parametersatz und/oder die Neuberechnung von Umleitungsflugbahn (130a, 130b)/zweitem Parametersatz so konvergieren, dass sie einem Konvergenzkriterium genügen.

4. Verfahren nach einem der vorhergehenden Ansprüche, worin der Schritt zum Erzeugen eines ersten Parametersatzes von Fluganweisungen ein Erzeugen einer Nachschlagetabelle umfasst, die mehrere verschiedene Luftfahrzeugsollgeschwindigkeiten für mehrere verschiedene Abstände zwischen dem ersten und dem zweiten Luftfahrzeug aufweist.

5. Verfahren nach Anspruch 4, worin die Inhalte der Nachschlagetabelle auf Basis der Zielluftfahrzeugkapazität am Wegzusammenführungspunkt erzeugt werden.

6. Verfahren nach Anspruch 5, worin die Inhalte der Nachschlagetabelle ferner auf Basis von Simulationen mehrerer Flüge erzeugt werden, die jeweils durch eine oder mehrere der folgenden Variablen beschränkt werden: Luftraumbeschaffenheit, tatsächliche Wetterbedingungen, Höhenbeschränkungen, Geschwindigkeitsbeschränkungen, Flugleitung, Flugleistung.

7. Verfahren nach einem der vorhergehenden Ansprüche, worin der Schritt zum Erzeugen eines zweiten Parametersatzes von Fluganweisungen ein Erzeugen von Anweisungen auf Basis einer Zielluftfahrzeugkapazität am Wegzusammenführungspunkt (10, 10') umfasst.

8. Verfahren nach Anspruch 7, worin die Anweisungen ferner auf Basis von Simulationen mehrerer Flüge erzeugt werden, die jeweils durch eine oder mehrere der folgenden Variablen beschränkt werden:
(a) Festlegen eines Anbindungswegpunkts (60a, 60b, 110a, 110b in einem ersten Abstand D_{OPD} zum Wegzusammenführungspunkt (10, 10'),
(b) Erzeugen eines ersten Parametersatzes von Fluganweisungen für ein an dem Anbindungswegpunkt (60a, 60b, 110a, 110b) ankommendes Luftfahrzeug, wobei der erste Parametersatz eine Luftfahrzeuggeschwindigkeitsanweisung für einen Zielabstand zwischen einem ersten Luftfahrzeug, das an einem Zielwegpunkt ankommt, und einem zweiten Luftfahrzeug, das an dem Zielwegpunkt ankommt, umfasst,
(c) Festlegen einer Umleitungsflugbahn in einem Abstand D_{PM} zum Wegzusammenführungspunkt (10, 10'), wobei D_{PM} < D_{OPD} ist, und
(d) Erzeugen eines zweiten Parametersatzes von Fluganweisungen für ein an der Umleitungsflugbahn (130a, 130b) ankommendes Luftfahrzeug, wobei der zweite Parametersatz das erste Luftfahrzeug anweist, zumindest einem Teil der Umleitungsflugbahn zu folgen bevor es zum Wegzusammenführungspunkt (10, 10') fliegt, wodurch sich die Gesamtflugbahn des ersten Luftfahrzeugs verlängert, wenn festgestellt wird, dass der Abstand der voraussichtlichen Ankunft des ersten Luftfahrzeugs am Zielwegpunkt zu der des zweiten Luftfahrzeugs kürzer als ein Abstandsgrenzwert ist.

9. Verfahren nach einem der vorhergehenden Ansprüche, worin der Zielwegpunkt den Wegzusammenführungspunkt bildet.

10. Computerprogramm, das bei einer Ausführung die Verfahrensschritte gemäß einem der vorhergehenden Ansprüche ausführt.

11. Computerprogrammprodukt, das ein Computerprogramm gemäß Anspruch 10 verkörpert oder transportiert.

## Revendications

1. Procédé de contrôle des arrivées d'avions à un point de cheminement convergent, qui comprend les étapes qui consistent à :
(a) définir un point de cheminement de rattachement (60a, 60b, 11a, 11b) qui se trouve à une première distance D_{OPD} du point de cheminement convergent (10, 10') ;
(b) générer un premier groupe de paramètres d'instructions de vol pour un avion qui arrive au point de cheminement de rattachement (60a, 60b, 110a, 110b), le premier groupe de paramètres comprenant une instruction de vitesse de l'avion pour une séparation cible entre un premier avion qui arrive à un point de cheminement cible en aval du point de cheminement (60a, 60b, 110a, 110b) et un second avion qui arrive au point de cheminement cible ;
(c) définir une trajectoire de vol de diversion (130a, 130b) qui se trouve à une distance D_{PM} du point de cheminement convergent (10, 10'), où D_{PM} < D_{OPD} ;
(d) générer un second groupe de paramètres d'instructions de vol pour un avion qui arrive à la trajectoire de vol de diversion (130a, 130b), le second groupe de paramètres demandant au premier avion de suivre au moins une partie de la trajectoire de vol de diversion avant de voler jusqu'au point de cheminement convergent (10, 10'), moyennant quoi la trajectoire de vol totale du premier avion est augmentée, lorsqu'il est déterminé que l'arrivée prévue du premier et du second avions au point de cheminement cible (10, 10') aura une séparation qui sera plus courte qu'une séparation de seuil ;
(e) recalculer le point de cheminement de rattachement (60an, 60b, 110a, 110b) et le premier groupe de paramètres de façon à optimiser la consommation de carburant de l'avion tout en maintenant une séparation au niveau du point de cheminement cible qui dépasse la séparation de seuil, la trajectoire de vol de diversion (130a, 130b), et le second groupe de paramètres étant fixes, tandis que la distance du point de cheminement de rattachement D_{OPD} et le premier groupe de paramètres sont recalculés ;
et
(f) recalculer la trajectoire de vol de diversion (130a, 130b) et le second groupe de paramètres de façon à optimiser la consommation de carburant de l'avion tout en maintenant une séparation au point de cheminement cible qui dépasse la séparation de seuil, le point de cheminement de rattachement (60a, 60b, 110a, 110b) et le premier groupe de paramètres recalculés étant fixes, tandis que la trajectoire de vol de diversion et le second groupe de paramètres sont recalculés à leur tour.

2. Procédé de contrôle des arrivées d'avions à un point de cheminement convergent, qui comprend les étapes qui consistent à :
(a) définir une trajectoire de vol de diversion (130a, 130b) qui se trouve à une distance D_{PM} du point de cheminement convergent (10, 10'),
(b) générer un second groupe de paramètres d'instructions de vol pour l'avion qui arrive à la trajectoire de vol de diversion (130a, 130b), le second groupe de paramètres demandant à un premier avion de suivre au moins une partie de la trajectoire de vol de diversion avant de voler jusqu'au point de cheminement convergent (10, 10'), moyennant quoi la trajectoire de vol totale du premier avion est augmentée, lorsqu'il est déterminé que l'arrivée prévue du premier et d'un second avions à un point de cheminement cible en aval du point de cheminement aura une séparation plus courte qu'une séparation de seuil ;
(c) définir un point de cheminement de rattachement (60a, 60b, 110a, 110b) qui se trouve à une première distance D_{OPD} du point de cheminement convergent (10, 10'), où D_{PM} < D_{OPD} ;
(d) générer un premier groupe de paramètres d'instructions de vol pour l'avion qui arrive au point de cheminement de rattachement (60a, 60b, 110a, 110b), le premier groupe de paramètres comprenant une instruction de vitesse d'avion pour une séparation cible entre le premier avion qui arrive au point de cheminement cible et le second avion qui arrive au point de cheminement cible ;
(e) recalculer la trajectoire de vol de diversion (130a, 130b) et le second groupe de paramètres de façon à optimiser la consommation de carburant de l'avion tout en maintenant une séparation au niveau du point de cheminement cible qui dépasse la séparation de seuil, le point de cheminement de rattachement (60a, 60b, 110a, 110b) et le premier groupe de paramètres étant fixes, tandis que la trajectoire de vol de diversion et le second groupe de paramètres sont recalculés ; et
(f) recalculer le point de cheminement de rattachement (60a, 60b, 110a, 110b) et le premier groupe de paramètres de façon à optimiser la consommation de carburant de l'avion tout en maintenant une séparation au niveau du point de cheminement cible qui dépasse la séparation de seuil, la trajectoire de vol de diversion recalculée (130a, 130b) et le second groupe de paramètres recalculé étant fixes, tandis que la distance du point de cheminement D_{OPD} et le premier groupe de paramètres sont recalculés à leur tour.

3. Procédé selon la revendication 1 ou 2, qui comprend en outre :
la répétition des étapes (e) et (f) jusqu'à ce que le recalcul du point de cheminement de rattachement (60a, 60b, 110a, 110b)/du premier groupe de paramètres et/ou le recalcul de la trajectoire de vol de diversion (130a, 130b)/du second groupe de paramètres converge de façon à satisfaire une critère de convergence.

4. Procédé selon l'une quelconque des revendications précédentes, dans lequel l'étape de génération d'un premier groupe de paramètres d'instructions de vol comprend la génération d'une table de recherche qui comprend une pluralité de différentes vitesses d'avion commandées pour une pluralité d'espacements différents entre le premier et le second avions.

5. Procédé selon la revendication 4, dans lequel le contenu de la table de recherche est généré sur la base de la capacité cible de l'avion au niveau du point de cheminement convergent.

6. Procédé selon la revendication 5, dans lequel le contenu de la table de recherche est en outre généré sur la base de simulations d'une pluralité de vols qui sont chacun limités par une ou plusieurs des variables suivantes :
configuration de l'espace aérien ; conditions météorologiques réelles ; contraintes d'altitude ; contraintes de vitesse ; guidage de l'avion ; performances de l'avion.

7. Procédé selon l'une quelconque des revendications précédentes, dans lequel l'étape de génération d'un second groupe de paramètres d'instructions de vol comprend la génération d'instructions sur la base de la capacité cible de l'avion au niveau du point de cheminement convergent (10, 10').

8. Procédé selon la revendication 7, dans lequel les instructions sont en outre générées sur la base de simulations d'une pluralité de vols qui sont chacun limités par une ou plusieurs des variables suivantes :
(a) définition d'un point de cheminement de rattachement (60a, 60b, 110a, 110b) à une première distance D_{OPD} du point de cheminement convergent (10, 10') ;
(b) génération d'un premier groupe de paramètres d'instructions de vol pour l'avion qui arrive au point de cheminement de rattachement (60a, 60b, 110a, 110b), le premier groupe de paramètres comprenant une instruction de vitesse d'avion pour une séparation entre un premier avion qui arrive à un point de cheminement cible, et un second avion qui arrive au point de cheminement cible ;
(c) définition d'une trajectoire de vol de diversion à une distance D_{PM} du point de cheminement convergent (10, 10'), où D_{PM} < D_{OPD} ; et
(d) génération d'un second groupe de paramètres d'instructions de vol pour l'avion qui arrive à la trajectoire de vol de diversion (130a, 130b), le second groupe de paramètres demandant au premier avion de suivre au moins une partie de la trajectoire de vol de diversion avant de voler jusqu'au point de cheminement convergent (10, 10'), moyennant quoi la longueur totale de la trajectoire de vol du premier avion est augmentée, lorsqu'il est déterminé que l'arrivée prévue du premier avion et du second avion au point de cheminement cible auront une séparation plus courte qu'une séparation de seuil.

9. Procédé selon l'une quelconque des revendications précédentes, dans lequel le point de cheminement cible est le point de cheminement convergent.

10. Programme informatique qui, lorsqu'il est exécuté, réalise les étapes du procédé selon l'une quelconque des revendications précédentes.

11. Produit de programme informatique qui comprend ou contient le programme informatique selon la revendication 10.
